# EUROPÄISCHE PATENTANMELDUNG

(11) **EP 3 395 617 A1**
(43) Veröffentlichungstag der Anmeldung: **31.10.2018**
(21) Anmeldenummer: 17187330.0
(22) Anmeldetag: 22.08.2017
(51) Int. Cl.: B60R 13/02, B60R 13/04, H01Q 1/12

(54) **ZIERTEIL MIT INTEGRIERTER ANTENNE**

(30) Priorität: 25.04.2017 EP 17168011
(71) Anmelder: DURA Automotive Holdings U.K., Ltd., Birmingham, West Midlands B35 7AG (GB)
(72) Erfinder: Schulte, Martin, 58802 Balve (DE); Schulze zur Wiesche, Jochen, 51143 Köln (DE)
(74) Vertreter: Bungartz Christophersen Partnerschaft mbB Patentanwälte

(57) **Zusammenfassung**

Um für ein Außenzierteil (1) eines Kraftfahrzeugs gegenüber bekannten Zierteilen einen erweiterten Funktionsumfang zu schaffen, ohne die Zierfunktion des Zierteils gegenüber nicht funktionserweiterten Zierteilen zu beeinträchtigen, ist vorgesehen, dass eine Antenne (5, 6) sandwichartig zwischen einem Dekorteil (2, 3) und einem Trägerteil (3) des Zierteils gehalten ist oder dass eine Antenne (5) an der im bestimmungsgemäßen Einbauzustand zur Karosserie weisenden Innenseite des Trägerteils (3) gehalten ist.

## Beschreibung

Die Erfindung betrifft ein Zierteil für ein Kraftfahrzeug, insbesondere ein als Leistenbauteil ausgebildetes Zierteil, umfassend ein äußeres Dekorteil sowie ein inneres Trägerteil, welches mit dem Dekorteil verbunden ist, um gemeinsam das Zierteil zu bilden, wobei das Dekorteil aus einem Dekormaterial hergestellt und bei bestimmungsgemäßer Anbringung des Zierteils am Kraftfahrzeug eine von der Karosserie wegweisende Dekorfläche ausbildet, die das Erscheinungsbild der sichtbaren Flächen des Kraftfahrzeugs mitbestimmt, und wobei das Trägerteil aus einem sich bevorzugt vom Dekormaterial unterscheidenden Trägermaterial hergestellt ist und bei bestimmungsgemäßer Anbringung des Zierteils am Kraftfahrzeug der Karosserie zugewandt ist. Zierteile dieser Art können insbesondere Säulenblenden (A-, B-, C- oder D-Säulenblenden), Aero-Blenden, Spoiler, Windläufe oder Verblendungen von Windschutzscheibenrahmen sein.

Die Erfindung betrifft ferner Verfahren zur Herstellung eines derartigen Zierteils.

Zierteile dieser Art sind beispielsweise aus der EP 2 450 240 B1 oder aus der EP 1 695 808 B2 bekannt. Diese Zierteile sind als Leistenbauteile ausgeführt und bestehen aus mehreren Komponenten, wobei eine Komponente (das Dekorteil) eine überwiegend dekorative Funktion und eine weitere Komponente (das Trägerteil) von dem Dekorteil verdeckt ist und überwiegend technische Aufgaben übernimmt, etwa das Tragen von Dichtungselementen oder die Bildung von Befestigungselementen zum Zusammenwirken mit der bzw. zum Anbringen an die Karosserie. Die Hauptfunktion derartiger Leistenbauteile beschränkt sich aber mit Ausnahme weniger technischmechanischer Funktionen auf eine reine Zierfunktion.

Ein Zierteil der eingangs genannten Art soll dahingehend weitergebildet werden, dass dieses gegenüber den bekannten Zierteilen einen erweiterten Funktionsumfang aufweist. Insbesondere soll das Zierteil über die bisherigen Funktionen hinausgehende Funktionen erfüllen, für die es aufgrund seiner typischerweise leistenartigen, sich länglich erstreckenden und flach bauenden Ausgestaltung, seines konstruktiven Aufbaus und seiner Positionierung am Kraftfahrzeug prädestiniert ist. Gleichzeitig soll die Zierfunktion des Zierteils gegenüber nicht funktionserweiterten Zierteilen nicht beeinträchtigt sein.

Die Erfindung sieht vor, dass zusätzlich zum Dekorteil und zum Trägerteil eine Antenne sandwichartig zwischen Dekorteil und Trägerteil gehalten ist oder dass eine Antenne an der im bestimmungsgemäßen Einbauzustand zur Karosserie weisenden Innenseite des Trägerteils gehalten ist.

Hinsichtlich der Verfahren zur Herstellung eines derartigen Zierteils wird die Erfindung durch die Merkmale der Patentansprüche 14 oder 15 gelöst.

Hierbei kann insbesondere vorgesehen sein, dass das Aufbringen des Dekormaterials auf das Trägermaterial bzw. das Aufbringen des Trägermaterials auf das Dekormaterial durch Aufbringen des Dekormaterials bzw. des Trägermaterials auf der Fügefläche des Trägerteils bzw. des Dekorteils und der am jeweiligen Antennentragabschnitt befestigten Antenne in einem Spritzgussprozess erfolgt.

Die Erfindung wird damit dem steigenden Bedarf an Assistenz-, Multimedia- und Mobilfunksystemen in Fahrzeugen gerecht, mit dem sich der Bedarf an zusätzlich im Fahrzeug untergebrachten Hilfsmitteln, die eine umfangreiche Nutzung derartiger Systeme ermöglicht, merklich erhöht. Die typische Positionierung derartiger Außenzierteile wie Säulenblenden (A-, B-, C- oder D-Säulenblenden), Aero-Blenden, Spoiler, Windläufe oder Verblendungen von Windschutzscheibenrahmen ist aufgrund ihrer Anordnung am Fahrzeug sowie der flächig-länglichen Ausgestaltung für den Einsatz von Antennen nahezu ideal. Dadurch, dass mehrere derartiger Zierteile räumlich getrennt voneinander am Fahrzeug angeordnet sind, kann eine Beeinflussung verschiedener Antennen untereinander weitgehend ausgeschlossen werden. Außerdem gewährleistet der Aufbau derartiger Außenzierleisten einen hinreichend großen Abstand zu benachbarten metallischen (Struktur-)Bauteilen. Insgesamt sind die räumliche Lage am Kraftfahrzeug sowie der Aufbau der Zierteile aus mehreren Komponenten (Dekorteil und Trägerteil) hervorragende Voraussetzungen zur Integration von Antennen am Kraftfahrzeug.

Es ist vorgesehen, dass sich das Dekormaterial und das Trägermaterial voneinander unterscheiden. Das Dekormaterial des Dekorteils ist bevorzugt ein thermoplastischer Kunststoff, der geeignet ist, eine kratzfeste, hochglänzende Dekorfläche als äußere Zier- und Sichtfläche zu bilden. Als Material kommt insbesondere PMMA in Betracht. Das Trägermaterial des Trägerteils ist insbesondere ein thermoplastischer Kunststoff mit einer hohen mechanischen Festigkeit, einer guten Schlagzähigkeit, der geeignet ist, Funktionsbauteile wie Befestigungsmittel, Clip-Verbindungen, Einschraublöcher für selbstfurchende Schrauben oder Ähnliches zu bilden. Als Material kommt insbesondere ABS oder PC-ABS in Frage.

Das Zierteil ist bevorzugt ein Außenzierteil, also ein Zierteil, das im bestimmungsgemäßen Einbauzustand an der Fahrzeugaußenseite der Rohkarosserie angeordnet ist. Wie eingangs bereits erwähnt kann dieses Bauteil insbesondere eine Säulenblende (A-, B-, C- oder D-Säulenblende), eine Aero-Blende, ein Spoiler, ein Windlauf oder eine Verblendung eines Windschutzscheibenrahmens sein.

Bevorzugt ist vorgesehen, dass Dekorteil und Trägerteil flächig aneinander liegen, wobei die Antenne dabei insbesondere sandwichartig zwischen dem Dekorteil und dem Trägerteil angeordnet sein kann. Die Antenne ist hierzu bevorzugt ebenfalls flächig, insbesondere folienartig ausgebildet.

Die Antenne kann zwischen Dekorteil und Trägerteil klemmend gehalten sein. Dekorteil und Trägerteil können insbesondere über mechanische Verbindungsglieder formschlüssig miteinander verbunden sein. Insbesondere können miteinander korrespondierende Rastelemente an Dekorteil und Trägerteil vorgesehen sein, über die Dekorteil und Trägerteil aneinander festgelegt werden. Die Antenne kann insbesondere sandwichartig zwischen Dekor- und Trägerteil gehalten, wobei die der Antenne zugewandten Flächenabschnitte der von Dekor- und Trägerteil bevorzugt in unmittelbarem Kontakt mit der bevorzugt als Folienantenne ausgebildeten Antenne stehen bzw. beidseitig der Antenne spielfrei an der Antenne anliegen.

Es kann insbesondere auch vorgesehen sein, dass Dekorteil und Trägerteil stoffschlüssig und unter Einschluss der Antenne miteinander verbunden sind. Dekorteil und Trägerteil können insbesondere miteinander verklebt oder verschweißt sein, wobei verschiedene Schweißverfahren wie Laserschweißen, Reibschweißen oder Ultraschallschweißen Verwendung finden können. Um Dekorteil und Trägerteil unter Umschließen der Antenne stoffschlüssig miteinander zu verbinden ist es ebenfalls möglich, dass zunächst das Dekorteil aus dem Dekormaterial bereitgestellt wird und anschließend eine Fügefläche des Dekorteil sowie die an diesem zuvor an einem Antennentragabschnitt platzierte Antenne von dem Material des Trägerteils über- bzw. unterspritzt oder überflutet wird, so dass die Antenne sandwichartig zwischen Dekorteil bzw. Dekormaterial und Trägerteil bzw. Trägermaterial eingeschlossen ist.

Ebenfalls denkbar ist, dass zunächst das Trägerteil aus dem Trägermaterial bereitgestellt wird, dann die Antenne an dem Trägerteil an einer dem Dekorteil zugewandten Antennentragabschnitt des Trägerteils angeordnet wird, und anschließend das Dekormaterial auf eine zum Antennentragabschnitt und zur Antenne benachbarte Fügefläche unter sandwichartigem Einschließen der Antenne zwischen Trägermaterial und Dekormaterial aufgebracht wird.

Eine derartige Fertigung kann bevorzugt innerhalb eines Spritzgusswerkzeugs im Rahmen eines Mehrkomponentenspritzgusses erfolgen.

Eine Kombination von formschlüssiger und stoffschlüssiger Verbindung ist ebenfalls denkbar, sofern diese sich nicht gegenseitig ausschließen. So kann beispielsweise zusätzlich zu korrespondierenden Rastelementen an Dekorteil und Trägerteil eine Klebeschicht eingesetzt werden, die Dekorteil und Trägerteil nach deren Verrasten zusätzlich miteinander verbindet und bevorzugt gleichzeitig als eine die die Bauhöhe der Antenne ausgleichende Ausgleichsmasse dient, so dass Dekorteil und Trägerteil trotz der dazwischen angeordneten Antenne an der Fügefläche bevorzugt durchgängig stoffschlüssig und spiel- bzw. spaltfrei aneinander anliegen.

Am Dekorteil und/oder am Trägerteil kann ferner eine Zugentlastung für ein Kabel der Antenne ausgebildet sein. Hierzu kann insbesondere vorgesehen sein, dass Dekorteil und Trägerteil derart ausgebildet sind, dass sich beim Zusammenfügen bzw. Verbinden von Dekorteil und Trägerteil eine als Zugentlastung einsetzbare Klemmstelle für ein Antennenkabel entsteht. Bevorzugt ist die Zugentlastung an der bei bestimmungsgemäßem Anbringen des Zierteils am Kraftfahrzeug zur Karosserie hinweisenden Seite des Trägerteils angeordnet ist.

Weiter kann am Trägerteil eine Durchführung zur Durchführung des Antennenkabels vorgesehen sein, durch die das Antennenkabel vor dem Aufsetzen der Antenne auf das Trägerteil oder auf das Dekorteil hindurchgeführt wird.

Um die Antenne und/oder das Antennenkabel am Dekorteil und/oder am Trägerteil gut befestigen zu können, können außerdem Befestigungselemente zur Befestigung der Antenne oder des Antennenkabels am Dekorteil und/oder am Trägerteil vorgesehen sein. Derartige Befestigungselemente können insbesondere einstückig mit dem Material des Dekorteils oder des Trägerteils an dem jeweiligen Teil ausgebildet sein. Bevorzugt werden die Befestigungselemente in einem Spritzgussprozess zusammen mit dem Dekorteil bzw. dem Trägerteil innerhalb des Spritzgusswerkzeugs ausgeformt.

Alternativ oder zusätzlich zu derartigen Befestigungselementen können am Dekorteil und/oder am Trägerteil auch als Positionierungsvorgabe dienende Positionierungselemente zur definierten Lagefestlegung der Antenne und/oder eines Antennenkabels vorgesehen sein. Auch derartige Positionierungselemente können werkstoffeinstückig mit dem Material des Dekorteils oder des Trägerteils an dem jeweiligen Teil ausgebildet sein und auch hier werden die Positionierungselemente bevorzugt in einem Spritzgussprozess zusammen mit dem Dekorteil bzw. dem Trägerteil innerhalb des Spritzgusswerkzeugs ausgeformt.

In einer vorteilhaften Ausgestaltung sind als Positionierungsvorgabe Positionierungselemente zur definierten Lagefestlegung der Antenne am Trägerteil vorgesehen, die aus einer Montagestellung, in der sie aus der Ebene eines Antennentragabschnitts des Trägerteils hervorstehen, in eine Rückzugsstellung, in der es in oder hinter die dem Dekorteil zugewandte Antennenoberfläche zurückgezogen sind, überführbar sind.

Um ein besonders gutes Haften der Antenne an dem Dekorteil und/oder dem Trägerteil zu ermöglichen, kann vorgesehen sein, die zum Dekorteil weisende Fläche des Trägerteils und/oder die zum Trägerteil weisende Fläche des Dekorteils mit einer Haftgrundierung versehen ist.

Die Antenne kann insbesondere eine Telefonantenne, eine Wifi-Antenne, eine Bluetooth-Antenne oder eine NFC-Antenne sein und ist bevorzugt als Folienantenne ausgebildet.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine schematische Ansicht eines Kraftfahrzeugs zur Darstellung möglicher Positionen eines Außenzierteils,
- Fig. 2: ein beispielhaft als A-Säulenblende ausgebildetes Zierteil mit einer Sicht auf die nach außen weisende Dekorfläche,
- Fig. 3: die in Figur 2 gezeigte Säulenblende in einer Ansicht auf die nach innen weisende Fläche eines Trägerteils,
- Fig. 3a: Einzelheit A aus Figur 3,
- Fig. 4: das Trägerteil des auch in Figur 2 und Figur 3 dargestellten Zierteils mit einer auf einen Antennentragabschnitt aufgesetzten Folienantenne,
- Fig. 4a: eine Einzelheit eines in Figur 4 von der Folienantenne teilverdeckten Positionselements in einer Montagestellung,
- Fig. 4b: eine Einzelheit eines in Figur 4 von der Folienantenne teilverdeckten Positionselements in einer Rückzugsstellung,
- Fig. 5: eine mögliche Ausgestaltung von am Trägerteil ausgebildeten Befestigungselementen zur Befestigung der Antenne am Trägerteil,
- Fig. 6: ein beispielhaft als Aero-Blende ausgebildetes Außenzierteil mit einer Sicht auf die nach außen weisende Dekorfläche,
- Fig. 7: das Trägerteil des Zierteils aus Figur 6 nach Abnahme der Dekorfläche, und
- Fig. 7a: Einzelheit B aus Fig. 7.

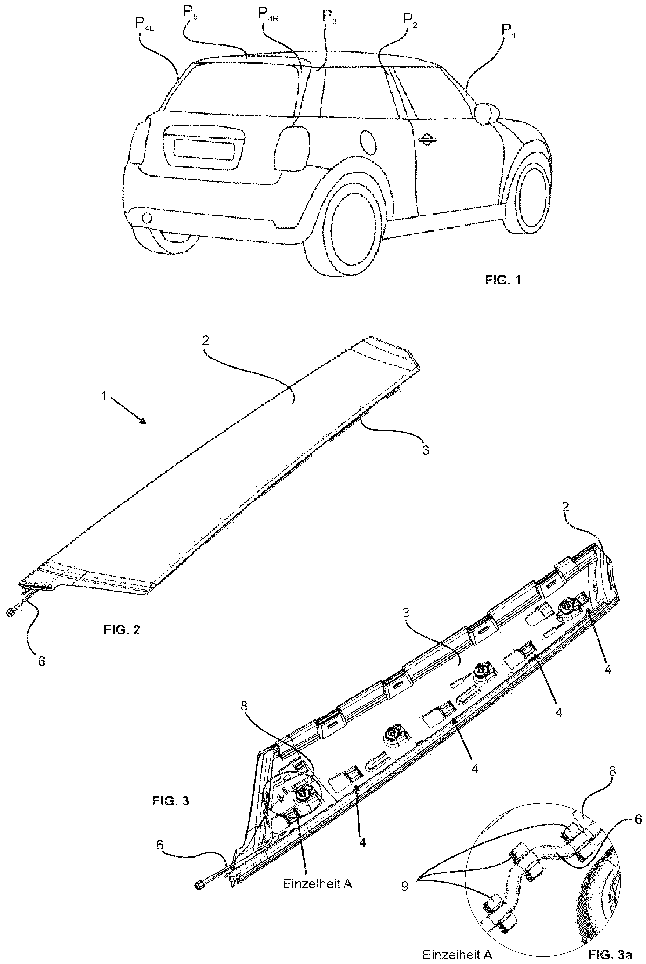

Figur 1 zeigt eine schematische Ansicht eines Kraftfahrzeugs zur Darstellung möglicher Positionen eines Zierteils, welches bevorzugt ein Außenzierteil ist, das an der Außenseite der Fahrzeugkarosserie angeordnet ist. Bei dem Außenzierteil kann es sich demnach beispielsweise um eine A-Säulenblende (Position P₁), eine B-Säulenblende (P₂), eine C-Säulenblende (P₃), eine Aero-Blende (P_{4L} und P_{4R}) und/oder einen Spoiler (P₅) handeln. Nachfolgend wird die Erfindung beispielhaft anhand einer A-Säulenblende und einer Aero-Blende erläutert. Selbstverständlich sind auch weitere als die in Figur 1 gezeigten Positionen denkbar.

Figur 2 zeigt ein als A-Säulenblende ausgebildetes Außenzierteil 1 mit einer Sicht auf die nach außen weisende Dekorfläche eines Dekorteils 2. Diese Dekorfläche 2 ist eine bei bestimmungsgemäßer Anbringung des Außenzierteils 1 an einem Kraftfahrzeug nach außen, also vom Fahrzeug wegweisende Oberfläche, die das äußere Erscheinungsbild des Kraftahrzeugs mitbestimmt. Das Dekorteil 2 hat überwiegend eine optische Funktion und ist aus einem Dekormaterial hergestellt.

Figur 3 zeigt das in Figur 2 gezeigte Außenzierteil 1 mit einer Sicht auf die nach innen (zur Fahrzeugkarosserie hin) weisende Innenseite bzw. Rückseite des Außenzierteils. Es ist zu erkennen, dass an der Rückseite des Dekorteils (die der nach außen weisenden Dekorfläche abgewandte Seite) ein Trägerteil 3 angeordnet ist. Dieses Trägerteil 3 ist aus einem Trägermaterial hergestellt, das sich von dem Dekormaterial unterscheidet.

Wie aus den Figuren 2 und 3 ersichtlich ist das Trägerteil 3 mittels mechanisch wirkenden Verbindungsgliedern 4, die zueinander korrespondierend an Dekorteil 2 und Trägerteil 3 angeordnet sind, an dem Dekorteil 2 gehalten, so dass sich zwischen den einander zugewandten Oberflächen des Dekorteils 2 und des Trägerteils 3 ein spaltartiger Zwischenraum mit minimaler Spaltbreite bildet.

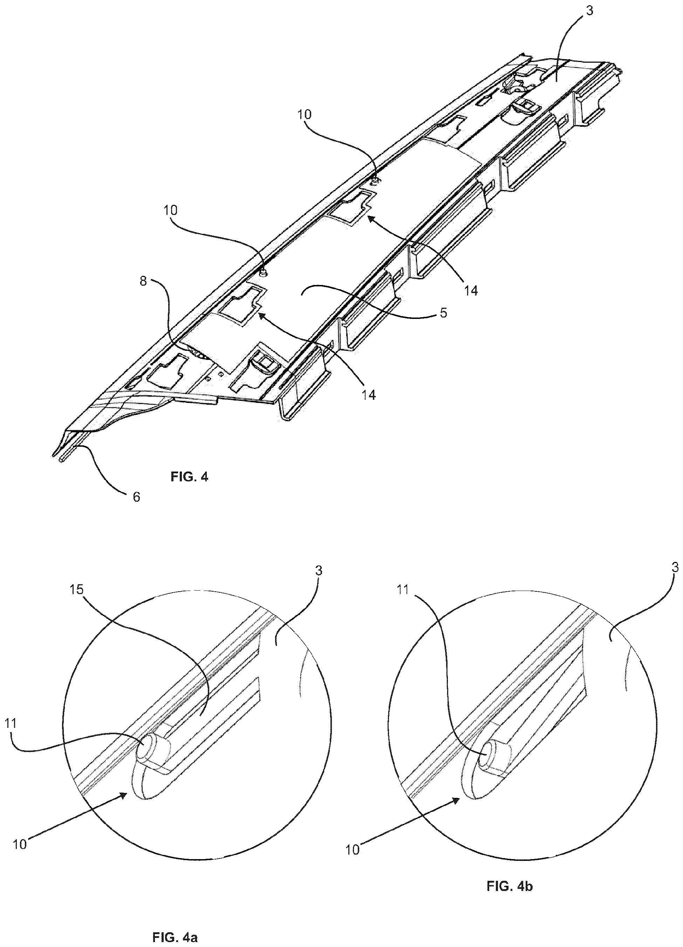

In diesem spaltartigen Zwischenraum ist eine in den Figuren 2 und 3 durch das Trägerteil verdeckte und erst aus Figur 4 ersichtliche Folienantenne 5 sandwichartig gehalten. In Figur 2 ist am unteren Rand des Außenzierteils ein Antennenkabel 6 zu erkennen, dass über den äußeren Rand des Dekorteils 2 hinausragt. Wie Figur 3 illustriert, ist dieses Antennenkabel 6 zuvor durch eine in dem Trägerteil 3 vorgesehene Durchgangsöffnung 7 hindurchgeführt. Anschließend wird das Antennenkabel 6 von einer Zugentlastung 9 umgriffen, die in Figur 3a nochmal als Einzelheit A aus Figur 3 dargestellt ist. Die Zugentlastung 9 ist aus mehreren sich paarweise erhebenden Klemmfortsätzen gebildet, deren Abstand zueinander derart bemessen ist, dass je ein Klemmfortsatzpaar das zwischen beiden Klemmfortsätzen des Klemmfortsatzpaares hindurchgeführte Antennenkabel 6 klemmend umgreift. Die einzelnen Klemmfortsatzpaare sind versetzt zum jeweils benachbarten Klemmfortsatzpaar angeordnet, um bei Zug an dem Antennenkabel 6 die Zugkraft wirksam in das Trägerteil ableiten zu können.

Figur 4 zeigt das Trägerteil 3 ohne das in Figur 2 noch daran angeordnete und das Trägerteil verdeckende Dekorteil 2 mit Blick auf die bei bestimmungsgemäß montiertem Zierteil der Rückseite des Dekorteils zugewandte Oberfläche des Trägerteils 3. Auf einem Antennentragabschnitt (dem Abschnitt dieser Oberfläche, der die Antenne trägt) ist eine Folienantenne 5 aufgebracht. An der Folienantenne 6 sind Positionierungshilfen in Form von zwei Löchern vorgesehen, die mit Positionierungselementen 10, die aus der Oberfläche des Trägerteils 3 hervorstehen, in Überdeckung gebracht werden können, um die korrekte Positionierung der Folienantenne 6 auf dem Trägerteil 3 vorzugeben. Außerdem weist die Folienantenne 6 seitliche Aussparungen 14 auf, die derart angeordnet sind, dass die korrespondierenden Verbindungsglieder 4, die an Dekorteil und Trägerteil ausgebildet sind, durch die Folienantenne nicht verschlossen sind. In dem in den Figuren 2 bis 4 gezeigten Ausführungsbeispiel halten diese Aussparungen 14 die dem Trägerteil 3 vorgesehenen Durchbrechungen, in die die am Dekorteil vorgesehenen Rastglieder eingreifen, frei, so dass die Folienantenne den Zusammenbau von Dekor- und Trägerteil nicht behindert.

Figuren 4a und 4b zeigen eine mögliche Ausgestaltung eines Positionierungselements 10. In Figur 4a ist das Positionierungselement in einer Montagestellung gezeigt, die das Positionierungselement bei der Montage der Antenne auf dem Trägerteil einnimmt. Hierbei steht eine vom Positionierungselement hervorstehende Erhebung 11 nach außen vor. Lochartige Positionierungshilfen in der Folienantenne 6 können mit dieser Erhebung in Überdeckung gebracht werden, indem die Antenne 6 so auf dem Trägerteil angeordnet wird, dass diese Erhebung in die Positionierungshilfe eindringt. Um zu verhindern, dass diese Erhebung, die gegenüber der dem Dekorteil beim Zusammenbau des Zierteils zugewandten Antennenoberfläche hervorsteht, mit der Rückseite des Dekorteils kollidiert bzw. einem flächigen aneinanderfügen vom Dekorteil und Trägerteil nicht entgegensteht, ist die Erhebung 11 in eine Rückzugsstellung überführbar, in der die als Positionierungselement wirkende Erhebung 11 gegenüber Antennenoberfläche bzw. der Oberfläche des Antennentragabschnitts zurückgezogen ist. Hierzu ist die Erhebung 11 federnd gelagert, was in dem in den Figuren gezeigten Ausführungsbeispiel über einen einstückig mit dem Dekorteil ausgebildeten und - wie in Figur 4a gezeigt - in der Dekorteilebene befindlichen oder in diese Ebene überführbaren Schwenkarm 15 gewährleistet ist, der in der Erhebung 11 mündet.

Es kann sowohl vorgesehen sein, dass die in Figur 4a gezeigte Montagestellung die Position ist, die das unbelastete Positionierungselement aufweist, wobei dann das Aufsetzen des Dekorteils bzw. der Kontakt von dessen Rückseite mit der Erhebung 11 das Positionierungselement in die in Figur 4b gezeigte Rückzugsstellung drückt. Oder es kann vorgesehen sein, dass die in Figur 4b gezeigt Rückzugsstellung die Position ist, die das unbelastete Positionierungselement aufweist, wobei dann bei der Montage von der Innenseite des Trägerteils (der dem Dekorteil bei bestimmungsgemäßem Zusammenbau des Zierteils abgewandten Seite des Trägerteils) eine Montagehilfe vorübergehend gegen die Innenseite drückt, um die Positionierungshilfe für den Zeitraum der Montage bzw. Aufbringung der Antenne in die in Figur 4a dargestellte Montagestellung zu überführen.

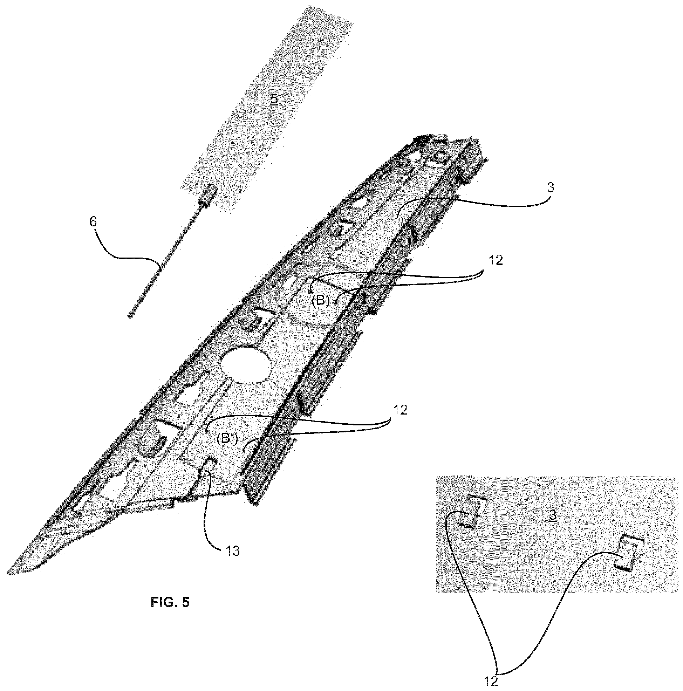

Figur 5 illustriert schließlich eine mögliche Ausgestaltung von am Trägerteil 3 vorgesehenen, hakenförmigen Befestigungselementen 12, die beispielhaft im Bereich der in Figur 5 gekennzeichneten Positionen B und B' vorgesehen sein können. Auch hierbei können in der Antenne vorgesehene Löcher über diese hakenförmigen Befestigungselemente gelegt werden, so dass die Antennenfolie von den Befestigungselementen durchdrungen und übergriffen und damit - gegebenenfalls zusätzlich zu einer Verklebung - gehalten wird. Diese Befestigungselemente 12 erfüllen damit nicht nur eine Befestigungsfunktion, sondern dienen zugleich, oder - falls die Antenne maßgeblich durch eine stoffschlüssige Verbindung auf dem Trägerteil gehalten ist - weitgehend ausschließlich als Positionierungselemente.

Figur 5 zeigt darüber hinaus, dass anstelle der in Figur 3 erkennbaren Durchgangsöffnung 8 auf eine im Trägerteil 3 vorgesehene Vertiefung 13 vorgesehen sein kann, die zumindest einen Teil des Antennenkabels aufnimmt, so dass es gegenüber der bei bestimmungsgemäßen Zusammenbau dem Dekorteil zugewandten Fläche des Trägerteils nicht hervorsteht, ohne jedoch durch das Trägerteil 3 hindurchzutreten. Auch so kann verhindert werden, dass das Antennenkabel einem flächigen Aneinanderliegen von Dekorteil und Trägerteil entgegensteht.

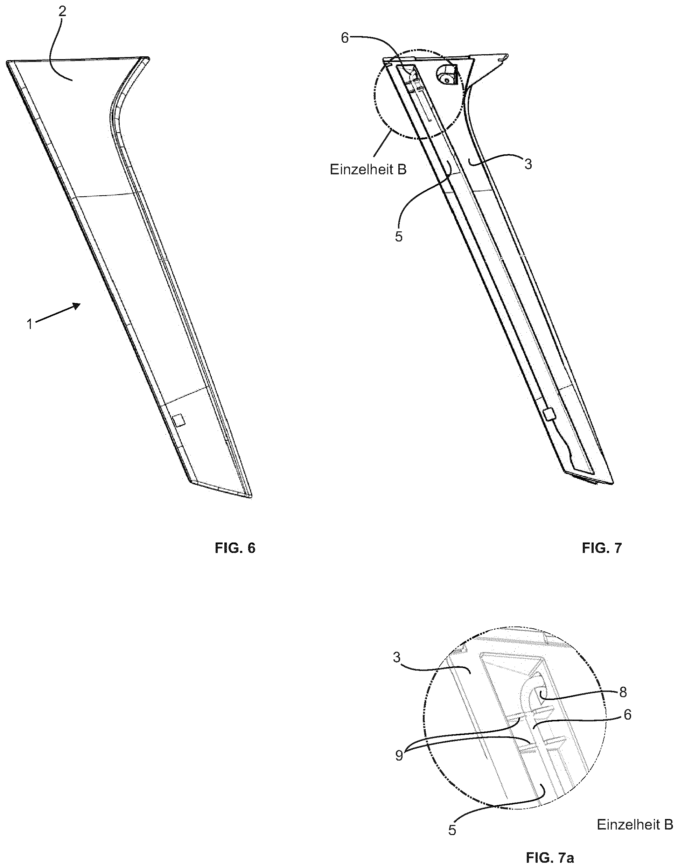

Figur 6 zeigt als weiteres Ausführungsbeispiel ein als Aero-Blende ausgebildetes Außenzierteil 1 mit einer Sicht auf die nach außen weisende Dekorfläche eines Dekorteils 2. Die dargestellte Aero-Blende entspricht dem in Figur 1 an Positionen P_{4L} dargestellten Außenzierteil. Figur 7 zeigt dieselbe Aeroblende mit dem vom Trägerteil 3 abgenommenen Dekorteil, wodurch eine zwischen Dekorteil und Trägerteil vorgesehene Antenne 5 zeichnerisch freigelegt ist. Figur 7a zeigt die in Figur 7 gekennzeichnete Einzelheit B im Detail.

Aus den Figuren 6 bis 7a ist ersichtlich, dass die zwischen Dekorteil 2 und Trägerteil 3 angeordnete Antenne 5 im oberen Bereich einer sich über die Länge des Trägerteils 3 erstreckenden Einsenkung aufgenommen ist. In der Einsenkung sind zwei Querrippen mit Einschnitten angeordnet, die das Antennenkabel 6 aufnehmen und als das Antennenkabel 6 klemmend haltende Zugentlastung 9 dienen. Am oberen Ende des Trägerteils 3 ist eine Durchgangsöffnung angeordnet, durch die das Antennenkabel 6 auf die zur Fahrzeugaußenfläche weisende Seite der Aeroblende hindurchgeführt ist. Die Durchgangsöffnung 8 ist derart angeordnet, dass das Hindurchführen des Kabels dem flächigen Aneinander-Anliegen der einander zugewandten Flächen des Dekorteils und des Trägerteils nicht entgegensteht.

Das in den Figuren 6 bis 7a illustrierte Ausführungsbeispiel verdeutlichen, dass die Antenne auch in einem sich bei bestimmungsgemäßen Zusammenfügen von Dekorteil und Trägerteil zwischen diesen Bauteil ergebenden Zwischenraum angeordnet sein kann und die der Antenne zugewandten Oberflächen von Dekor- und Trägerteil nicht notwendigerweise beidseitig der Antenne an der Antenne anliegen müssen.

Soweit die vorstehenden Figuren jeweils die Antenne 5 als am Trägerteil 3 befestigt gezeigt haben, sei darauf hingewiesen, dass es selbstverständlich auch denkbar ist, dass die Antenne an dem Dekorteil angeordnet ist. Die vorstehend beschriebenen und auf das Trägerteil bezogenen Details können auch am Dekorteil vorgesehen sein.

### Bezugszeichenliste

- 1: Außenzierteil
- 2: Dekorteil
- 3: Trägerteil
- 4: Verbindungsglieder
- 5: Folienantenne
- 6: Antennenkabel
- 8: Durchgangsöffnung
- 9: Zugentlastung
- 10: Positionierungselemente
- 11: Erhebung
- 12: Befestigungselemente
- 13: Vertiefung
- 14: Ausnehmung
- 15: Schwenkarm

- Pₓ: beispielhafte Zierteilpositionen

## Patentansprüche

1. Zierteil für ein Kraftfahrzeug umfassend ein äußeres Dekorteil (2) sowie ein inneres Trägerteil (3), welches mit dem Dekorteil (2) verbunden ist, um gemeinsam das Zierteil (1) zu bilden, wobei das Dekorteil (2) aus einem Dekormaterial hergestellt und bei bestimmungsgemäßer Anbringung des Zierteils am Kraftfahrzeug eine von der Karosserie wegweisende Dekorfläche ausbildet, und wobei das Trägerteil (3) aus einem Trägermaterial hergestellt ist und bei bestimmungsgemäßer Anbringung des Zierteils (1) am Kraftfahrzeug der angrenzenden Fahrzeugaußenfläche zugewandt ist,
**dadurch gekennzeichnet, dass**
zusätzlich zum Dekorteil (2) und zum Trägerteil (3) eine Antenne (6) zwischen Dekorteil (2) und Trägerteil (3) gehalten ist
oder
dass eine Antenne (5) an der im bestimmungsgemäßen Einbauzustand zur Karosserie weisenden Innenseite des Trägerteils (3) gehalten ist.

2. Zierteil nach Anspruch 1, **dadurch gekennzeichnet, dass** sich das Trägermaterial von dem Dekormaterial unterscheidet.

3. Zierteil nach einem der beiden vorhergehenden Ansprüche, **dadurch gekennzeichnet, dass** die der Antenne (5) zugewandten Flächenabschnitte von Dekorteil (2) und Trägerteil (3) flächig an der Antenne liegen.

4. Zierteil nach einem der vorhergehenden Ansprüche, **dadurch gekennzeichnet, dass** Dekorteil (2) und Trägerteil (3) über mechanische Verbindungsglieder (4) miteinander verbunden sind.

5. Zierteil nach einem der vorhergehenden Ansprüche, **dadurch gekennzeichnet, dass** Dekorteil (2) und Trägerteil (3) stoffschlüssig miteinander verbunden sind.

6. Zierteil nach einem der vorhergehenden Ansprüche, **dadurch gekennzeichnet, dass** am Dekorteil (2) und/oder am Trägerteil (3) eine Zugentlastung (9) für ein Kabel (6) der Antenne (5) ausgebildet ist.

7. Zierteil nach einem der vorhergehenden Ansprüche, **dadurch gekennzeichnet, dass** die Zugentlastung (9) an der bei bestimmungsgemäßem Anbringen des Zierteils (1) am Kraftfahrzeug zur Karosserie weisenden Innenseite des Trägerteils (3) angeordnet ist.

8. Zierteil nach einem der vorhergehenden Ansprüche, **dadurch gekennzeichnet, dass** am Trägerteil (3) eine Durchführung (8) zur Durchführung eines Antennenkabels (6) vorgesehen ist.

9. Zierteil nach einem der vorhergehenden Ansprüche, **dadurch gekennzeichnet, dass** am Dekorteil (2) und/oder am Trägerteil (3) Befestigungselemente (12) zur Befestigung der Antenne (5) oder eines Antennenkabels (6) vorgesehen sind.

10. Zierteil nach einem der vorhergehenden Ansprüche, **dadurch gekennzeichnet, dass** am Dekorteil (2) und/oder am Trägerteil (3) wenigstens ein Positionierungselement (10) zur definierten Lagefestlegung der Antenne (5) oder eines Antennenkabels (6) vorgesehen ist.

11. Zierteil nach einem der vorhergehenden Ansprüche, **dadurch gekennzeichnet, dass** das wenigstens ein Positionierungselement (10) zwischen einer Montagestellung, in der es aus der zum Dekorteil (2) weisenden Ebene eines Antennentragabschnitts des Trägerteils (3) hervorsteht, und einer Rückzugsstellung, in der es in oder hinter die dem Dekorteil (2) zugewandte Antennenoberfläche zurückgezogen ist, beweglich ist.

12. Zierteil nach einem der vorhergehenden Ansprüche, **dadurch gekennzeichnet, dass** die zum Dekorteil (2) weisende Fläche des Trägerteils (3) und/oder die zum Trägerteil (3) weisende Fläche des Dekorteils (2) zumindest teilweise mit einer Haftgrundierung versehen ist.

13. Zierteil nach einem der vorhergehenden Ansprüche, **dadurch gekennzeichnet, dass** die Antenne (5) als Folienantenne ausgebildet ist.

14. Verfahren zur Herstellung eines Zierteils (1) nach einem der vorherigen Ansprüche mit einem Dekorteil (2) sowie einem Trägerteil (3), welches mit dem Dekorteil (2) verbunden ist, um gemeinsam das Zierteil (1) zu bilden, wobei das Dekorteil (2) aus einem Dekormaterial hergestellt und bei bestimmungsgemäßer Anbringung des Zierteils (1) am Kraftfahrzeug eine von der Karosserie wegweisende Dekorfläche ausbildet, und wobei das Trägerteil (2) aus einem Trägermaterial hergestellt ist und bei bestimmungsgemäßer Anbringung des Zierteils (1) am Kraftfahrzeug der Karosserie zugewandt ist, **gekennzeichnet durch** die Verfahrensschritte:
- Bereitstellen eines Dekorteils (2) aus einem Dekormaterial und eines Trägerteils (3) aus einem Trägermaterial,
- Anbringen einer Antenne (5) an dem Dekorteil (2) an einem dem Trägerteil (3) zugewandten Antennentragabschnitt des Dekorteils (2) oder Anbringen einer Antenne (5) an dem Trägerteil (3) an einem dem Dekorteil (2) zugewandten Antennentragabschnitt des Trägerteils (3),
- stoffschlüssiges und/oder formschlüssiges Zusammenfügen des Dekorteils (2) mit dem Trägerteil (3) unter Einschluss der Antenne (5) zwischen Dekorteil (2) und Trägerteil (3).

15. Verfahren zur Herstellung eines Zierteils (1) nach einem der Ansprüche 1 bis 13 mit einem Dekorteil (2) sowie einem Trägerteil (3), welches mit dem Dekorteil (2) verbunden ist, um gemeinsam das Zierteil (1) zu bilden, wobei das Dekorteil (2) aus einem Dekormaterial hergestellt und bei bestimmungsgemäßer Anbringung des Zierteils (1) am Kraftfahrzeug von der Karosserie wegweisend ausgerichtet ist und eine Dekorfläche ausbildet, und wobei das Trägerteil (3) aus einem sich vom Dekormaterial unterscheidenden Trägermaterial hergestellt ist und bei bestimmungsgemäßer Anbringung des Zierteils am Kraftfahrzeug der Karosserie zugewandt ist, **gekennzeichnet durch** die Verfahrensschritte:
- Bereitstellen eines Dekorteils (2) aus einem Dekormaterial,
- Anbringen einer Antenne an dem Dekorteil (2) an einem beim fertigen Zierteil dem Trägerteil (3) zugewandten Antennentragabschnitt des Dekorteils (2),
- Aufbringen des Trägermaterials auf eine zum Antennentragabschnitt und zur Antenne (5) benachbarte Fügefläche unter Einschließen der Antenne (5) zwischen Dekormaterial und Trägermaterial,
oder
- Bereitstellen eines Trägerteils (3) aus einem Trägermaterial,
- Anbringen einer Antenne (5) an dem Trägerteil (3) an einer dem Dekorteil (2) zugewandten Antennentragabschnitt des Trägerteils (3),
- Aufbringen des Dekormaterials auf eine zum Antennentragabschnitt und zur Antenne benachbarte Fügefläche unter Einschließen der Antenne (5) zwischen Trägermaterial und Dekormaterial.
